# FASCICULE DE BREVET EUROPEEN

(11) **EP 0 340 092 B1**
(45) Date de publication et mention de la délivrance du brevet: **13.07.1994**
(21) Numéro de dépôt: 89401156.8
(22) Date de dépôt: 24.04.1989
(51) Int. Cl.: C08F 20/56, C04B 41/48

(54) **Procédé d'étanchéification par injection d'un mélange à base d'acrylamide et mélange correspondant**
Verfahren zum Wasserabdichten durch Injektion eines Gemisches auf Basis von Acrylamid und das entsprechende Gemisch
Process for water-proofing by injection of a mixture based on arcrylamide and corresponding mixture

(30) Priorité: 29.04.1988 FR 8806075
(43) Date de publication de la demande: 02.11.1989
(73) Titulaire: Gosselin, Claude, F-59126 Linselles (FR)
(72) Inventeur: Gosselin, Claude, F-59126 Linselles (FR)
(74) Mandataire: Hénnion, Jean-Claude

(56) Documents cités:
- EP-A- 0 079 703
- FR-A- 2 014 812

## Description

La présente invention concerne l'étanchéification d'ouvrages notamment en béton et en particulier d'ouvrages constamment en milieu humide , par injection d'un mélange d'une solution aqueuse de polyacrylamide et d'un amorceur de polymérisation.

Les fissures apparaissant dans les ouvrages enfouis en béton ont des causes diverses : microfissurations provoquées ou dues à des bétons poreux, fissures de retrait, fissures dues à des descentes de charges, aux reprises de bétonnage, aux joints de construction , etc. Selon la situation géographique de l'ouvrage concerné, ces fissures sont plus ou moins gorgées d'eau, mais généralement restent constamment dans un état humide.

Pour être efficace, l'étanchéification de l'ouvrage nécessite d'évacuer l'eau de la fissure avant de procéder à son colmatage. De manière connue on utilise la technique d'injection appliquée avec des résines du type acrylique dont la polymérisation n'est pas gênée par la présence d'eau. On connaît par exemple dans le Bulletin Technique de la Suisse Romande du 27 juillet 1963 un mélange pour étanchéification par injection comportant une solution aqueuse d'acrylamide et de méthylène-bisacrylamide et un produit catalytique redox. Ce mélange présente comme avantage d'être facilement injectable du fait que sa viscosité est proche de celle de l'eau jusqu'au moment de la prise , d'être utilisable dans tous les milieux même très humides. De plus sa résistance limite est atteinte très rapidement après le commencement de la prise. Malgré ses avantages indéniables, ce mélange à base d'acrylamide n'a pas connu un développement important du fait, semble-t-il , de certaines difficultés de mise en oeuvre.

Dans les chantiers, le mélange des deux composants, a savoir la solution d'acrylamide et du catalyseur redox est réalisée manuellement juste avant l'injection par un personnel non spécialisé et ne disposant pas de moyens de contrôle . Toute erreur dans les proportions du mélange ou toute dégradation du catalyseur peuvent entraîner des conséquences importantes notamment en ce qui concerne le temps de prise, qui est au départ choisi en fonction du problème d'étanchéification à résoudre.De plus si le mélange comporte un excès de catalyseur redox, le catalyseur en excès diffusera dans le milieu aqueux de l'ouvrage et s'il s 'agit de béton armé il provoquera la dégradation des structures en acier de l'ouvrage.

On a déjà apporté une solution à cette difficulté de mise en oeuvre en proposant une machine, décrite dans le brevet français FR-A 83 16 253 , dans laquelle l'alimentation des deux composants , leur mélange et leur injection sont réalisés automatiquement et de manière réglable.

Cependant, la difficulté n'est pas totalement résolue en cas de dysfonctionnement de la machine ou d'un mauvais réglage de celui-ci par l'opérateur. Le repérage immédiat de ce dysfonctionnement ou de ce mauvais réglage est impossible.

Or on a trouvé et c'est ce qui fait l'objet de l'invention un procédé d'étanchéification par injection qui pallie les difficultés rencontrées. Ce procédé est du type connu selon lequel on mélange deux solutions aqueuses, l'une à base d'acrylamide et l'autre contenant un amorceur de polymérisation et on injecte le mélange ainsi formé dans la zone à étanchéifier. Selon l'invention d'une part l'une au moins des solutions contient un indicateur coloré ayant une coloration donnée dans la solution à base d'acrylamide et une coloration différente dans la solution contenant l'amorceur et dont la zone de virage de coloration correspond à la proportion optimale des réactifs en solution et d'autre part, lors du mélange, on ajuste les quantités respectives des deux solutions dans la zone de virage de l'indicateur coloré de telle sorte que le mélange ait la coloration correspondant à celle de l'indicateur dans la solution à base d'acrylamide.

Ainsi la présence de l'indicateur coloré permet de suivre visuellement le bon déroulement du mélange même pour un opérateur non spécialisé.

De préférence, lors du mélange, on ajoute en excès de la solution contenant l'amorceur de telle sorte que le mélange ait la coloration correspondant à celle de l'indicateur dans la solution contenant l'amorceur , puis progressivement la solution à base d'acrylamide jusqu'au changement de coloration.

En agissant de cette façon, l'opérateur peut contrôler visuellement lors de la réalisation du mélange qu'il est dans la zone de virage de l'indicateur, c'est-à-dire dans la zone correspondant à la proportion optimum des réactifs, acrylamide et amorceur, mais que l'amorceur n'est pas en excès par rapport à la solution d'acrylamide. Ainsi par un contrôle visuel simple, on est assuré que l'injection dans le béton armé n'entraînera pas de dégradation des structures en acier.

S'agissant d'une première solution aqueuse à base d'acrylamide et de méthylène bisacrylamide tamponnée avec du triéthanolamide glycol, dénommé ci-après TEAG, et d'une seconde solution aqueuse de persulfate d'ammonium, l'indicateur coloré choisi a une zone de virage correspondant à un pH de l'ordre de 8, par exemple il s'agit du bleu de bromophénol qui est bleu en milieu basique et qui vire au jaune pâle à un pH inférieur à 8.

Avantageusement , selon le procédé de l'invention, on arrête l'injection lorsque l'on voit ressortir le mélange coloré de la zone à étanchéifier. Le mélange coloré sert de traceur, il permet de visualiser la sortie du mélange de la zone d'étanchéification ,après que celui-ci ait remplacé l'eau d'infiltration.

De préférence dans ce cas, l'indicateur coloré choisi perd sa coloration après polymérisation complète de la solution à base d'acrylamide. Cette propriété évite de laisser des traces colorées sur les parties extérieures de la zone à étanchéifier.

L'invention sera mieux comprise à la lecture de la description qui va maintenant être faite d'exemples de mise en oeuvre du procédé de l'invention.

Le problème posé consiste à étanchéifier une fissure existant dans un ouvrage en béton enfoui, par exemple dans une galerie souterraine, soumis en permanence à des pressions hydrauliques et à une température de l'ordre de 20°C.

On dispose de deux récipients distincts contenant chacun une solution aqueuse. Le premier bidon contient une solution colorée en bleu ayant la composition pondérale suivante :

| | |
|---|---|
| acrylamide | 57 % |
| méthylène bisacrylamide | 3 % |
| triéthanolamide glycol (TEAG) | 5,6 % |
| eau | 34,4 % |
| bleu de bromophénol | quelques traces. |

Le second bidon contient une solution aqueuse ayant la composition pondérale suivante :

| | |
|---|---|
| persulfate d'ammonium | 1,8 % |
| phosphate disodique | 5 % |
| phosphate trisodique | 5 % |
| eau | 88,2 % |

Les compositions ci-dessus ont été déterminées de sorte que, dans le cas où l'opérateur dispose d'un matériel traditionnel, celui-ci réalise le mélange des deux solutions en proportions égales. En pratique l'opérateur réalise le mélange en versant le contenu des deux bidons dans un troisième récipient muni d'un agitateur mécanique. Le mélange a une coloration bleue persistante, correspondant à un léger excès de solution d'acrylamide dans la zone de virage du bleu de bromophénol.

L'opérateur introduit le mélange ainsi formé dans la machine à injection, fait pénétrer les tubes d injection dans les trous percés correspondant à la fissure, et injecte sous faible pression le mélange dans la zone d'étanchéification. Généralement on voit sourdre de l'eau, qui était préalablement contenue dans la fissure, de place en place, puis on voit apparaître le mélange coloré, ce qui indique que la fissure est colmatée et l'opérateur arrête l'injection et retire la canne. Quelques minutes après, une fois que la réaction exothermique de polymérisation de l'acrylamide est achevée, la coloration due au bleu de bromophénol s'estompe et le produit polymérisé est sensiblement translucide.

Dans le cas décrit d'un matériel traditionnel, il est indispensable de limiter les quantités mises en jeu dans le mélange compte-tenu du risque de polymérisation dudit mélange avant injection. Cette manière de faire entraîne une incertitude pour l'opérateur : selon que la fissure à étanchéifier est importante ou de petite dimension, ce que l'opérateur ne sait pas par avance , la quantité mélangée peut être soit insuffisante pour colmater totalement la fissure soit en excès.

C'est pourquoi il est recommandé d'utiliser un matériel automatique d'injection du type décrit dans le brevet FR-A-83.16.253, qui élimine la contrainte due au temps de polymérisation. Le réglage de la machine automatique d'injection est le suivant. L'opérateur plonge, dans les deux bidons contenant l'un la solution d'acrylamide et l'autre la solution de persulfate, les deux cannes d'alimentation de la machine, et ajuste les débits d'alimentation des deux cannes de telle sorte que le mélange, en sortie du tube d'injection, ne soit pas coloré. Puis il augmente le débit de la canne correspondant à la solution d'acrylamide jusqu'à ce que le mélange en sortie soit coloré en bleu et le reste. Il peut alors commencer l'injection comme précédemment.

Comme cela ressort clairement de la description qui vient d'être faite, le procédé de l'invention permet l'utilisation de la technique d'injection d'un mélange d'étanchéification à base d'acrylamide par un opérateur peu qualifié , sans appareillage de contrôle sophistiqué : les solutions sont prêtes à l'emploi, le dosage optimum des ingrédients est réalisé par simple examen visuel , à l'occasion du passage du mélange d'une coloration à une autre. De plus le mélange ainsi coloré sert de point de repère pour la fin de l'injection, sans que cela nuise à l'aspect esthétique de l'ouvrage par décoloration de l'indicateur coloré après polymérisation.

L'invention n'est pas limitée à l'exemple de réalisation qui vient d'être décrit. En particulier les proportions des différents ingrédients dans le mélange pourront varier en fonction de la nature de l'ouvrage à étanchéifier, de la teneur en eau de cet ouvrage, de la température ambiante. D'autre part, d'autres indicateurs colorés peuvent être choisis, par exemple le bleu de bromocrésol ou la phénol phtaléine.

## Revendications

1. Procédé d'étanchéification du type selon lequel on mélange deux solutions aqueuses l'une à base d'acrylamide et l'autre contenant un amorceur de polymérisation et on injecte le mélange ainsi formé dans la zone à étanchéifier,caractérisé en ce que d'une part l'une au moins des solutions contient un indicateur coloré ayant une coloration donnée dans la solution à base d'acrylamide et une coloration différente dans la solution contenant l'amorceur et dont la zone de virage de coloration correspond à la proportion optimale des réactifs en solution et d'autre part, lors du mélange,on ajuste les quantités respectives des deux solutions dans la zone de virage de l'indicateur coloré de telle sorte que le mélange ait la coloration correspondant à celle de l'indicateur dans la solution à base d'acrylamide.

2. Procédé selon la revendication 1 caractérisé en ce que , lors du mélange on ajoute d'abord en excès de la solution contenant l'amorceur de telle sorte que le mélange ait la coloration corespondant à celle de l'indicateur dans la solution contenant l'amorceur, puis progressivement on ajoute la solution à base d'acrylamide jusqu'au changement persistant de coloration.

3. Procédé selon l'une des revendications 1 et 2 caractérisé en ce que, la première solution contenant de l'acrylamide, du méthylène bisacrylamide et du triéthanolamide glycol et la seconde du persulfate d'ammonium , l'indicateur coloré a une zone de virage correspondant à un pH de l'ordre de 8.

4. Procédé selon la revendication 3 caractérisé en ce que l'indicateur coloré est le bleu de bromophénol.

5. Procédé selon l'une des revendications 1 à 3 caractérisé en ce qu'on arrête l'injection lorsqu'on voit ressortir le mélange coloré de la zone à étanchéifier.

6. Procédé selon la revendication 5 caractérisé en ce que la coloration du mélange disparaît après polymérisation.

7. Mélange d'étanchéification par injection réalisé à partir d'une solution aqueuse à base d'acrylamide et d'une solution aqueuse d'un amorceur de polymérisation caractérisé en ce que l'une au moins des solutions constitutives du mélange contient un indicateur coloré ayant une coloration donnée dans la solution à base d'acrylamide et une coloration différente dans la solution contenant l'amorceur et dont la zone de virage de coloration correspond à la proportion optimale des réactifs en solution, et en ce que les quantités respectives des deux solutions dans le mélange sont ajustées , dans la zone de virage de l'indicateur coloré, de telle sorte que le mélange ait la coloration correspondant à celle de l'indicateur dans la solution à base d'acrylamide.

8. Mélange selon la revendication 7 caractérise en ce que , la première solution contenant de l'acrylamide , du méthylène bisacrylamide et du triéthanolamide glycol, l'indicateur coloré a une zone de virage correspondant à un pH de l'ordre de 8.

9. Mélange selon la revendication 7 caractérisé en ce que l'indicateur coloré perd sa coloration après polymérisation des réactifs.

10. Mélange selon les revendications 8 et 9 caractérisé en ce que l'indicateur coloré est le bleu de bromophénol.

## Claims

1. Sealing method of the type in which two aqueous solutions are mixed together, one of the solutions being based on acrylamide and the other containing a polymerization trigger, and the mixture formed in this way is injected into the zone to be sealed, characterized in that firstly at least one of the solutions contains a color indicator having a given color in the solution based on acrylamide and a different color in the solution contained in the trigger, and whose color changeover zone corresponds to the optimum proportions of the reagents in solution, and secondly, during mixing, the respective quantities of the two solutions are adjusted to occupy the changeover zone of the color indicator such that the mixture takes up the color corresponding to the color of the indicator in the solution based on acrylamide.

2. Method according to claim 1, characterized in that, during mixing, excess solution containing the trigger is initially added so that the mixture takes up the color corresponding to the color of the indicator in the solution containing the trigger, after which the solution based on acrylamide is added progressively until a persistent color change is obtained.

3. Method according to one of claims 1 and 2, characterized in that the first solution contains acrylamide, methylenebisacrylamide, and triethanolamide glycol, the second solution contains ammonium persulfate, and the color indicator has a changeover zone corresponding to a pH of about 8.

4. Method according to claim 3, characterized in that the color indicator is bromophenol blue.

5. Method according to one of claims 1 to 3, characterized in that injection is stopped when the colored mixture is seen to come out from the zone being sealed.

6. Method according to claim 5, characterized in that the color of the mixture disappears after polymerization.

7. Mixture for sealing by injection, the mixture being made from an aqueous solution based on acrylamide and from an aqueous solution of a polymerization tirgger, characterized in that at least one of the component solutions in the mixture contains a color indicator having a given color in the solution based on acrylamide and a different color in the solution containing the trigger, and whose color changeover zone corresponds to the optimum proportions of the reagents in solution, and in that the respective quantities of the two solutions in the mixture are adjusted in the changeover zone of the color indicator in such a manner that the mixture takes up the color corresponding to the color of the indicator in the solution based on acrylamide.

8. Mixture according to claim 7, characterized in that the first solution contains acrylamide, methylenebisacrylamide, and triethanolamide glycol, and the color indicator has a changeover zone corresponding to a pH of about 8.

9. Mixture according to claim 7, characterized in that the color indicator loses its color after the reagents have polymerized.

10. Mixture according to claims 8 and 9, characterized in that the color indicator is bromophenol blue.

## Patentansprüche

1. Verfahren zum Abdichten der Art, nach der man zwei wässerige Lösungen mischt, von denen eine auf Basis von Acrylamid besteht und die andere ein Polymerisationsauslösungsmittel enthält, und man spritzt das so entstandene Gemisch in die abzudichtende Zone, dadurch gekennzeichnet, daß einerseits mindestens eine der Lösungen einen Farbindikator enthält, welcher eine bestimmte Färbung in der Lösung auf Acrylamidbasis und eine andere Färbung in der das Auslösungsmittel enthaltenden Lösung aufweist und deren Farbänderungsbereich dem optimalen Verhältnis von gelösten Reagenzien entspricht, und daß man andererseits beim Mischen die jeweiligen Mengen der beiden Lösungen im Farbänderungsbereich des Farbindikators so abstimmt, daß das Gemisch die Färbung aufweist, die der Färbung des Indikators in der Lösung auf Acrylamidbasis entspricht.

2. Verfahren nach Anspruch 1, dadurch gekennzeichnet, daß man beim Mischen zunächst mehr der das Auslösungsmittel enthaltenden Lösung zugibt, so daß das Gemisch die Färbung hat, die der des Indikators in der das Auslösungsmittel enthaltenden Lösung entspricht, und dann nach und nach die Lösung auf Acrylamidbasis zugibt bis zur dauerhaften Änderung der Färbung.

3. Verfahren nach einem der Ansprüche 1 und 2, dadurch gekennzeichnet, daß, nachdem die erste Lösung Acrylamid, Methylen-Bisacrylamid und Triethanolamid-Glykol und die zweite Ammoniumpersulfat enthält, der Farbindikator eine Farbänderungszone aufweist, die einem pH-Wert von etwa 8 entspricht.

4. Verfahren nach Anspruch 3, dadurch gekennzeichnet, daß der Farbindikator Bromphenolblau ist.

5. Verfahren nach einem der Ansprüche 1 bis 3, dadurch gekennzeichnet, daß man mit dem Einspritzen aufhört, wenn man das Farbgemisch aus der abzudichtenden Zone austreten sieht.

6. Verfahren nach Anspruch 5, dadurch gekennzeichnet, daß die Färbung des Gemischs nach der Polymerisation verschwindet.

7. Gemisch zum Abdichten durch Einspritzen, hergestellt aus einer wässerigen Lösung auf Acrylamidbasis und einer wässerigen Lösung eines Polymerisationsauslösungsmittels, dadurch gekennzeichnet, daß mindestens eine der Lösungen, aus denen das Gemisch besteht, einen Farbindikator enthält, welcher eine bestimmte Färbung in der Lösung auf Acrylamidbasis und eine andere Färbung in der das Auslösungsmittel enthaltenden Lösung aufweist und deren Farbänderungsbereich dem optimalen Verhältnis von gelösten Reagenzien entspricht, sowie dadurch, daß die jeweiligen Mengen der beiden Lösungen im Gemisch im Farbänderungsbereich des Farbindikators so abgestimmt werden, daß das Gemisch die Färbung aufweist, welche der Färbung des Indikators in der Lösung auf Acrylamidbasis entspricht.

8. Gemisch nach Anspruch 7, dadurch gekennzeichnet, daß, nachdem die erste Lösung Acrylamid, Methylen-Bysacrylamid und Triethanolamid-Glykol enthält, der Farbindikator eine Farbänderungszone aufweist, die einem pH-Wert von etwa 8 entspricht.

9. Gemisch nach Anspruch 7, dadurch gekennzeichnet, daß der Farbindikator seine Farbe nach Polymerisation der Reagenzien verliert.

10. Gemisch nach Anspruch 8 und 9 dadurch gekennzeichnet, daß der Farbindikator Bromphenolblau ist.
